# EUROPEAN PATENT SPECIFICATION

(11) **EP 3 805 621 B1**
(45) Date of publication and mention of the grant of the patent: **26.04.2023**
(21) Application number: 20197894.7
(22) Date of filing: 23.09.2020
(51) Int. Cl.: F16K 27/02, F16K 31/06, F16L 37/14

(54) **SOLENOID VALVE**
MAGNETVENTIL
SOUPAPE À SOLÉNOÏDE

(30) Priority: 07.10.2019 JP 2019184298
(43) Date of publication of application: 14.04.2021
(73) Proprietor: CKD CORPORATION, Komaki-shi Aichi 485-8551 (JP)
(72) Inventor: ITOH, Katsushi, Aichi-ken, Aichi 485-8551 (JP); KATOH, Atsushi, Aichi-ken, Aichi 485-8551 (JP); IGUCHI, Seiji, Aichi-ken, Aichi 485-8551 (JP); YOSHINO, Kohei, Aichi-ken, Aichi 485-8551 (JP)
(74) Representative: Murgitroyd & Company

(56) References cited:
- EP-A1- 1 892 408
- EP-A1- 3 382 244
- EP-A2- 1 544 455
- WO-A1-00/42315
- IT-A1- UA20 164 402
- US-A1- 2013 220 277
- US-A1- 2018 372 045

## Description

### TECHNICAL FIELD

The present invention relates to a solenoid valve that includes a hollow cylindrical solenoid part, a movable core, and a valve element and is configured to attract the movable core upon energization of the solenoid part to thereby move the valve element, wherein a coil assembly including the solenoid part and a body-pipe assembly having a pipe assembled to a body, the pipe including a sliding inner surface on which the movable core slides, are coupled with a clip transversely mounted therein, and the clip includes a leaf spring part that urges the coil assembly in a direction of the body-pipe assembly.

### BACKGROUND

In FIGs. 7 to 10 of Patent document 2, a driving device (a coil assembly) and a valve body are connected to each other by insertion of a shaft of the valve body into the driving device, so that an outer edge portion of an elastic web part (an elastic member) is deformed. In this state, a U-shaped pin member having no spring property is inserted in a second mounting hole of the driving device and a first mounting hole of the valve body. Thus, the driving device and the valve body are urged by the elastic member in a direction to separate from each other.

However, the solenoid valve disclosed in Patent document 2 has the following problems. Specifically, this solenoid valve needs the elastic member in addition to the pin member serving as a fastening tool, resulting in a problem that the number of components is large.

Furthermore, the pin member has to be inserted into the mounting holes of the driving device and the valve body while the elastic member remains elastically deformed when the shaft is inserted in the driving device. However, if the pin member could not be smoothly inserted into both the mounting holes, it is impossible to externally observe which direction the driving device should be moved to allow insertion of the pin member. Such an insertion work of the pin member is apt to be troublesome.

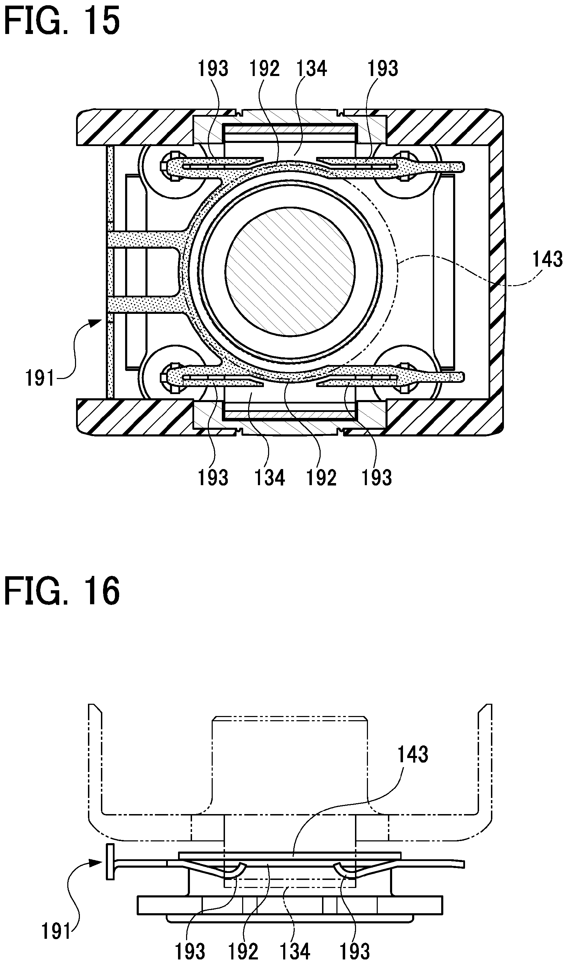

Therefore, the present applicant has proposed a solenoid valve disclosed in Patent document 1 in order to solve the above problems. To be specific, in this solenoid valve configured to attract a plunger upon energization of a hollow cylindrical coil molded portion to thereby move a valve element, as shown in accompanying FIGs. 15 and 16, a coil assembly including a coil molded portion and a body-pipe assembly including a body and a flare pipe assembled thereto, the flare pipe including a sliding inner surface on which the plunger slides, are coupled with a clip 191 transversely mounted therein. This clip 191 includes a clip body 192 and leaf spring parts 193 that urge the coil assembly in a direction of the body-pipe assembly. Thus, the leaf spring parts 193 urge a part 134 of the coil assembly and a part 143 of the body-pipe assembly in a direction to separate from each other.

### Related Art Documents

### Patent Documents

Patent Document 1: Japanese unexamined patent application publication No. 2018-179120
Patent Document 2: Japanese Patent No. 5819550
The document EP 3382244 A1 discloses a solenoid valve which includes a cylindrical coil molded part, a plunger, and a valve element.
The document EP1544455 (A2) discloses a distribution section, which supplies fuel to a fuel injection valve.
The document US 2018/0372045 A1 discloses a clip for an injector.

### SUMMARY

The solenoid valve in Patent document 1 however causes the following problems. In the clip 191, four leaf spring parts 193 to urge the coil assembly toward the body-pipe assembly are arranged symmetrically with respect to the central axis of the solenoid valve (i.e., the flare pipe) in order to uniformly press the coil assembly to the body-pipe assembly. For the purpose of arranging those four leaf spring parts 193 in parallel to the clip body 192, each leaf spring part 193 is made of a strip of a leaf spring part material having a width of 1 mm or less as shown in FIG. 15. Moreover, the flare pipe may become extended due to a large water hammer generated in the body-pipe assembly, so that the load applied on the leaf spring parts 193 is likely to increase. This may cause fatigue breakdown of the leaf spring parts 193 when the solenoid valve is repeatedly operated several hundred thousand times or several million times.

The present invention has been made to address the above problems and has a purpose to provide a solenoid valve including leaf spring parts configured to prevent fatigue breakdown even if the solenoid valve is repeatedly operated e.g. ten million times.

To achieve the above-mentioned purpose, one teaching of the present invention provides a solenoid valve according to claim 1.
(1) A solenoid valve 1 comprising a hollow cylindrical solenoid part 20, a movable core 60, and a valve element 75, the valve element 75 being configured to attract the movable core 60 upon energization of the solenoid part 20 to thereby move the valve element 75, wherein a coil assembly 2 including the solenoid part 20 and a body-pipe assembly 3 including a body 70 and a pipe 50 assembled to the body 70, the pipe 50 having a sliding inner surface 51a on which the movable core 60 slides, are coupled to each other with a clip 91 mounted transversely with respect to the assemblies 2, 3, and the clip 91 includes a leaf spring part 93, 96 configured to urge the coil assembly 2 in a direction of the body-pipe assembly 3, the body-pipe assembly 3 includes a stuffing 40 for coupling to the coil assembly 2, the stuffing 40 including a stuffing flange 43, the coil assembly 2 includes a magnetic core 10, 30 configured to surround the solenoid part 20 to form a magnetic circuit, and the magnetic core 10, 30 includes a pair of core flanges 34, each core flange having a sideways U-Shape in cross section bent inwardly to open inward, the leaf spring part 93, 96 is mounted between the stuffing flange 43 and the pair of core flanges 34, the leaf spring part 93, 96 having an open end between a left clip leaf spring part 93 and a right clip leaf spring part 96, the clip 91 includes: a clip body 91A having an open end and including a circular-arc inner circumferential portion 92a, 95a, the clip body being separated by a central part in a width direction between a left clip body part 92 and a right clip body part 95,the clip including: a left joined portion 99 bent into a U-shaped form connecting an end of the left clip body 91 A part opposite the open end of the clip body and a left end of the leaf spring part 93 opposite the open end of the leaf spring part; and a right joined portion 94 bent into a U-shaped form connecting an end of the right clip body 91A part opposite the open end of the clip body and a right end of the leaf spring part (93) opposite the open right end of the leaf spring part; wherein the left joined portion (94) and right joined portion (99) are separated by a cutout portion formed in the central part of the clip,the clip body 91A of the clip 91 is placed in contact with the stuffing flange 43, and the leaf spring part 93, 96 includes a contact portion 93a, 96a, the contact portion 93a, 96a being placed in contact with the core flange 34, wherein the clip 91 is placed such that the joined portion 94, 99 is located on one side and the leaf spring part 93, 96 is located on the other side relative to a central axis CL of the solenoid part 20 in a direction perpendicular to the width direction.

In the solenoid valve described in (1), the clip body is separated by a central part in a width direction into a pair of clip body parts arranged one on each side of the central part.

The solenoid valve configured as above can provide the following operations and effects.

In the Patent document 1, the clip body 192 and the leaf spring parts 193 are arranged in parallel to each other on the same level. In contrast, according to the foregoing configuration (1) of the present invention, the leaf spring parts are arranged at different positions in a height direction, i.e., arranged one above the other, so that the width of the leaf spring parts can be designed with a large width, for example, about 3 mm to 5 mm. Those leaf spring parts can therefore achieve such a high fatigue strength as to prevent fatigue breakdown even if the solenoid valve is repeatedly operated e.g. ten million times.

According to the foregoing configuration, furthermore, the leaf spring parts independently exert respective spring forces, so that the clip can make uniform spring actions as a whole. Thus, the leaf spring parts can stably urge the coil assembly in a direction of, or toward, the body-pipe assembly.

According to the foregoing configuration, moreover, the spring forces of the leaf spring parts continuously act in an opposite direction to a direction causing the clip to slip out, i.e., in an opposite direction to the joined portion. Thus, even if the solenoid valve is repeatedly operated e.g. ten million times, the leaf spring parts can stably urge the coil assembly in a direction of the body-pipe assembly without causing the clip to slip out.

### BRIEF DESCRIPTION OF THE DRAWINGS

FIG. 1 is a cross-sectional view taken along a line A-A in FIG. 3;
FIG. 2 is a cross sectional view taken along a line B-B in FIG. 3;
FIG. 3 is a perspective view of a solenoid valve in an embodiment of the present invention;
FIG. 4 is an exploded perspective view of a part of a coil-core assembly;
FIG. 5 is an exploded perspective view of a body-pipe assembly;
FIG. 6 is a perspective view of a coil assembly;
FIG. 7 is a completion view of the body-pipe assembly, in which screws are not illustrated;
FIG. 8 is a perspective view showing a coupling structure of the coil assembly and the body-pipe assembly and an assembling method thereof;
FIG. 9 is a perspective view of a clip in the embodiment;
FIG. 10 is a plan view of the clip;
FIG. 11 is a side view of the clip;
FIG. 12 is a view showing the clip mounted to the body-pipe assembly and the coil assembly;
FIG. 13 is a planar cross-sectional view of the clip in a mounted state;
FIG. 14 is a side view of the clip in the mounted state;
FIG. 15 is a planar cross-sectional view of a conventional clip, not according to the invention, in a mounted state; and
FIG. 16 is a side view of the conventional clip, not according to the invention, in the mounted state.

### DETAILED DESCRIPTION OF THE EXEMPLARY EMBODIMENTS

An embodiment of a solenoid valve according to the present invention will be described in detail below referring to the accompanying drawings.

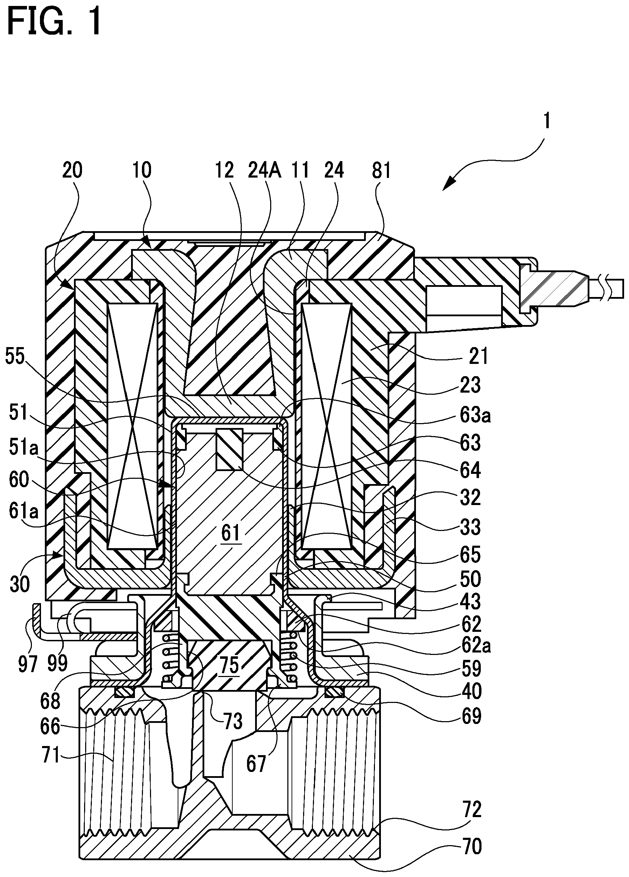

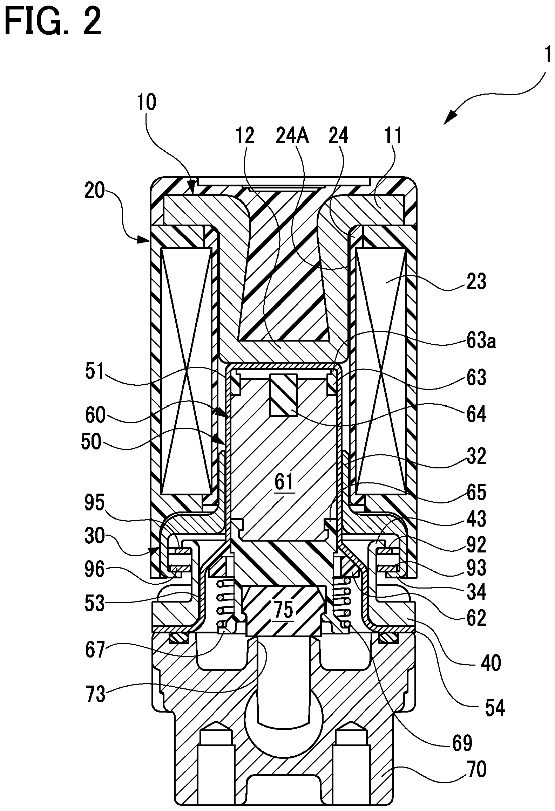

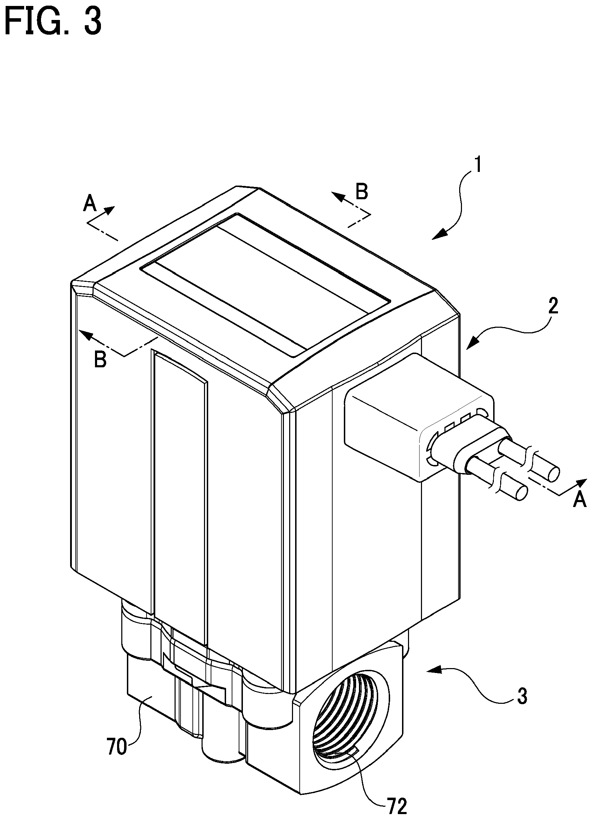

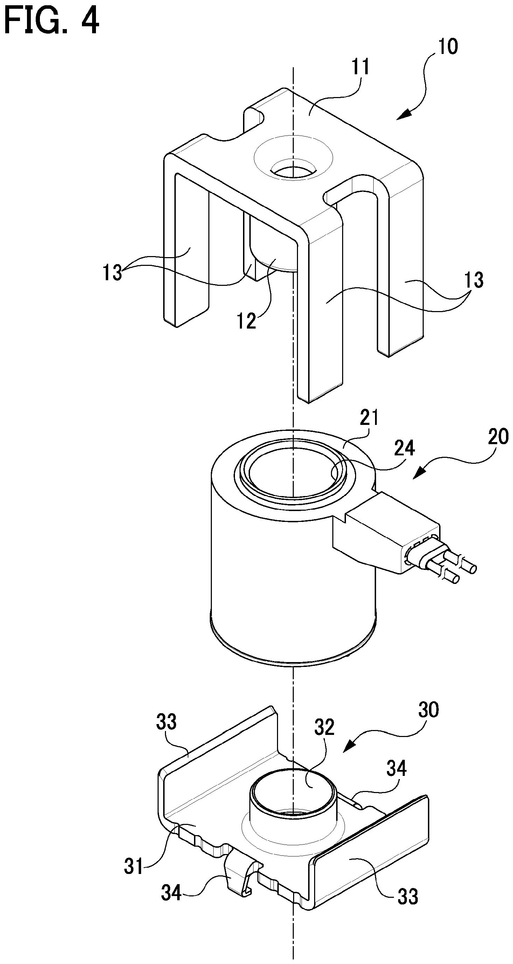

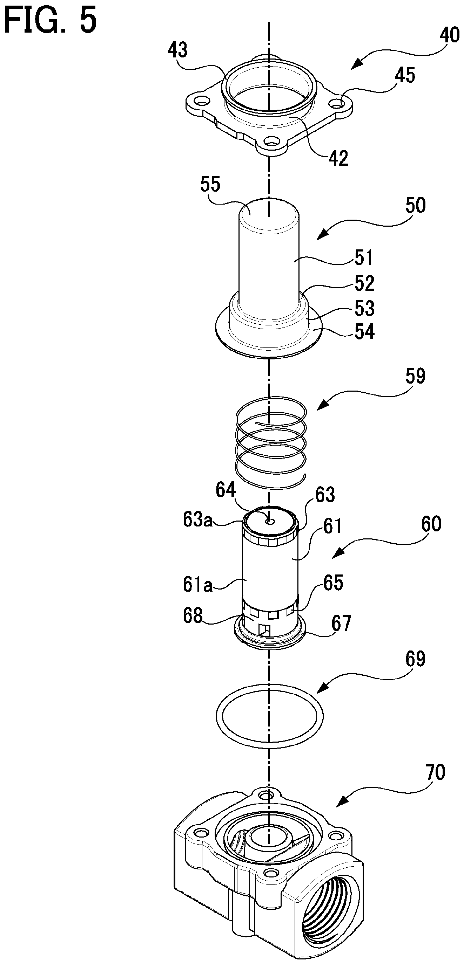

FIG. 3 is a perspective view of a solenoid valve 1 in the present embodiment. FIG. 1 is a cross-sectional view taken along a line A-A in FIG. 3, and FIG. 2 is a cross-sectional view taken along a line B-B in FIG. 3. FIG. 4 is an exploded perspective view of a part of a coil-core assembly. FIG. 5 is an exploded perspective view of a body-pipe assembly.

As shown in FIGs. 1, 2, and 4, the coil-core assembly includes an upper core 10 having an inverted nearly-U shape, a coil molded part 20 (one example of a solenoid part) containing a winding coil 23 embedded by molding, and a lower core 30. The upper core 10 and the lower core 30 (which are one example of a magnetic core) are each made of ferromagnetic material to form a part of a magnetic circuit. The upper core 10 includes an upper plate portion 11 having a nearly rectangular shape and being formed, at its center, with a protruding portion 12 (one example of a fixed core) having a bottom-closed cylindrical shape protruding downward in FIG. 4. The upper core 10 further includes four side plate portions 13 continuously extending downward two from each of two opposite side edges of the upper plate portion 11.

As shown in FIG. 4, the coil molded part 20 is made in such a manner that the coil 23 is wound on the outer periphery of a plastic hollow coil bobbin 24, and then this coil bobbin 24 with the coil 23 wound thereon is coated with resin by insert molding to form a molded portion 21.

The protruding portion 12 of the upper core 10 is inserted from above into a hollow hole 24A of the coil bobbin 24 which constitutes the hollow portion of the coil molded part 20.

The lower core 30 includes a bottom plate portion 31 having a nearly rectangular shape and including, at its center, a protruding portion 32 cylindrically protruding upward in FIG. 4. The lower core 30 further includes two side plate portions 33 and a pair of core flanges 34. The side plate portions 33 extend upward one by one from two opposite side edges of the bottom plate portion 31, i.e., toward the side plate portions 13 of the upper core 10. The core flanges 34 are formed one by one at two other opposite side edges of the bottom plate portion 31, not formed with the side plate portions 33. Each of the core flanges 34 is bent inwardly and has a sideways U-shape in cross-section to open inward as shown in FIG. 2.

The protruding portion 32 of the lower core 30 is inserted from below into the hollow hole 24A of the coil bobbin 24.

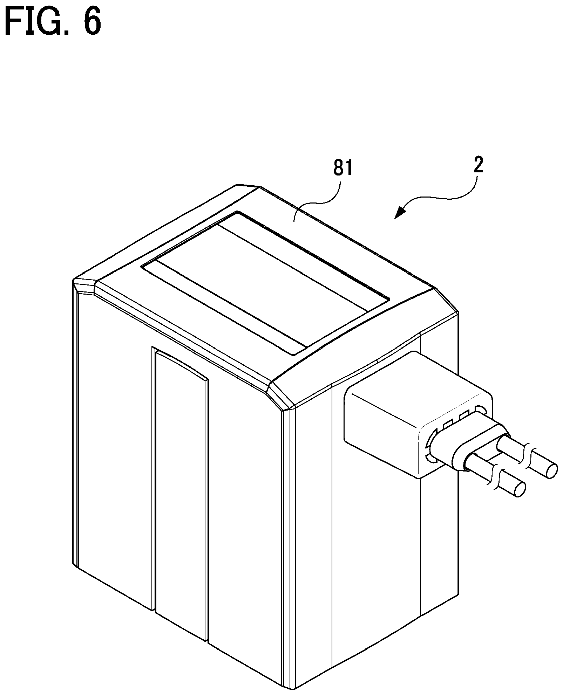

While the coil molded part 20 is held between the upper core 10 and the lower core 30, the leading ends of the side plate portions 13 are welded to the corresponding side plate portions 33. A coil-core assembly is thus completed. This coil-core assembly is then coated with resin by insert molding to form a molded portion 81. A coil assembly 2 shown in FIG. 6 is thus completed.

Next, a body-pipe assembly 3 will be described below.

As shown in FIGs. 1, 2, and 5, the body-pipe assembly 3 includes a stuffing 40 used for coupling to the coil assembly 2. Specifically, this stuffing 40 is fastened to a body 70 with four screws not shown while a flare pipe 50 and an O ring 69 are held therebetween. The stuffing 40 has a nearly square plate-like shape formed with screw holes 45 in four corners. At the center of this stuffing 40, there is provided a circumferential side wall 42 protruding upward. This side wall 42 is provided, at its leading end (i.e., an upper end in the figures), with a bent portion 43 bent radially outwardly over the entire circumference of the side wall 42.

The flare pipe 50 includes a hollow cylindrical portion 51 closed by a top face (i.e., a top wall) 55, a large-diameter portion 53 having a larger diameter than the cylindrical portion 51, and a diameter-widening portion 52 connecting between the cylindrical portion 51 and the diameter-widening portion 52. To be specific, this diameter-widening portion 52 perpendicularly extends radially outward from the cylindrical portion 51 to the large-diameter portion 53 so that the cylindrical portion 51 and the large-diameter portion 53 are parallel with each other.

The large-diameter portion 53 is provided, at its lower end, with a flange 54 extending radially outward. The flare pipe 50 is made of magnetic material, which will form a part of a magnetic circuit. Inside the large-diameter portion 53, a cylindrical compression spring 59 is accommodated.

A plunger 60 serving as a movable core includes a plunger body 61 made of ferromagnetic material. The plunger body 61 is formed, at the center of its upper face, with a hole in which a silencing rubber 64 is mounted so as to protrude from the upper face. The silencing rubber 64 serves to reduce impact noise generated when the plunger 60 is attracted toward the protruding portion 12 of the upper core 30 and strikes or collides against an inner surface of the flare pipe 50 opposite to the top face 55.

The plunger body 61 is formed with a plastic upper wear ring 63 circumferentially placed on an upper part of an outer peripheral surface. The upper wear ring 63 protrudes radially outward at regular intervals. The plunger body 61 is further formed, on the upper face, with a plastic ring 63a having a plurality of projections protruding outward in an axial direction (i.e., upward in the figures). The plastic ring 63a is provided integral with the upper wear ring 63 by integral molding. This ring 63a provides an interspace between the plunger body 61 and the inner surface opposite to the top face 55 of the flare pipe 50 when the plunger 60 is attracted as above, thereby forming an escape space for the silencing rubber 64 and also enhancing the returning property of the plunger body 61.

As shown in FIG. 1, the plunger body 61 is provided, at its lower end, with a valve element holder 68 made of resin by integral molding. On an outer periphery of an upper part of the valve element holder 68, a lower wear ring 65 protruding radially outward is arranged in a position above the lower end of the cylindrical portion 51 of the flare pipe 50 facing the holder 68.

The upper wear ring 63 and the lower wear ring 65 each protruding radially outward as described above are in contact with an inner peripheral surface (also referred to as a sliding inner surface) 51a of the cylindrical portion 51, so that a clearance is formed between the plunger body 61 and the cylindrical portion 51. In the present embodiment, a clearance of about 0.2 mm is formed, even though it is not explicitly illustrated in the figures, between an outer peripheral surface 61a (located between the upper wear ring 63 and the lower wear ring 65) of the plunger body 61 and the inner peripheral surface 51a of the cylindrical portion 51.

Accordingly, the outer peripheral surface 61a of the plunger body 61 is not in contact with the inner peripheral surface 51a of the cylindrical portion 51. Thus, the plunger body 61 and the cylindrical portion 51 do not slide on or rub against each other during operation. This can prevent deterioration of sliding surfaces due to repeated operations and generation of abrasion powder which may increase sliding resistance, leading to operation failure.

The above clearance acts as a magnetic resistance to a magnetic flux laterally flowing from the outer peripheral surface 61a of the plunger body 61 to the inner peripheral surface 51a of the cylindrical portion 51. Accordingly, the attraction force generated between the inner peripheral surface 51a of the cylindrical portion 51 and the outer peripheral surface 61a of the plunger body 61 can be reduced.

The valve element holder 68 is provided with a flange 67 protruding radially outward from a lower end of the outer periphery of the holder 68. A cavity 66 is formed in the holder 68, in which a rubber valve element 75 is mounted.

As shown in FIG. 1, the body 70 is provided with a first passage 71 and a second passage 72. These first passage 71 and second passage 72 are communicated with each other through a valve hole formed in the body 70. In this valve hole, a valve seat 73 is provided. When the valve element 75 is moved into contact with the valve seat 73, the first passage 71 and the second passage 72 are blocked from communicating with each other. On the other hand, when the valve element 75 is separated from the valve seat 73, the first passage 71 and the second passage 72 are allowed to communicate with each other.

The plunger 60 is slidably held within the flare pipe 50 through the upper wear ring 63 and the lower wear ring 65. The upper end of the compression spring 59 seats on a lower surface 62a of a spring retainer 62 press-fitted in the flare pipe 50, while the lower end of the compression spring 59 seats on the flange 67 of the plunger 60. The compression spring 59 urges the plunger 60 in a direction to move the valve element 75 into contact with the valve seat 73.

Herein, the contact surface of the spring retainer 62 contacting with the compression spring 59 is perpendicular to each of the cylindrical portion 51 and the large-diameter portion 53. Thus, the compression spring 59 is in stable contact with the lower surface 62a of the spring retainer 62. This configuration can stabilize the urging force of the compression spring 59 and achieve a stable motion of the plunger 60. Such compression spring 59 enables the valve element 75 to stably come into contact with the valve seat 73 to exert a stable sealing force. Moreover, the position of the compression spring 59 also has to be stabilized to avoid a risk that the compression spring 59 may enter the clearance between the plunger 60 and the cylindrical portion 51, leading to an operation failure.

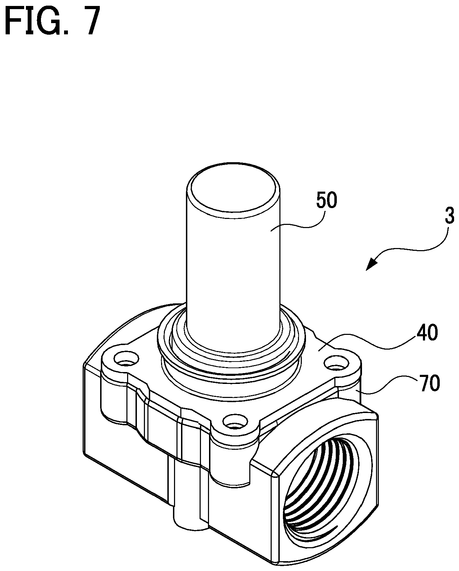

The stuffing 40 is secured to the body 70 with four screws not shown while the flare pipe 50 and the O ring 69 are held between the stuffing 40 and the body 70. Thus, the body-pipe assembly 3 shown in FIG. 7 (the screws are not shown) is completed.

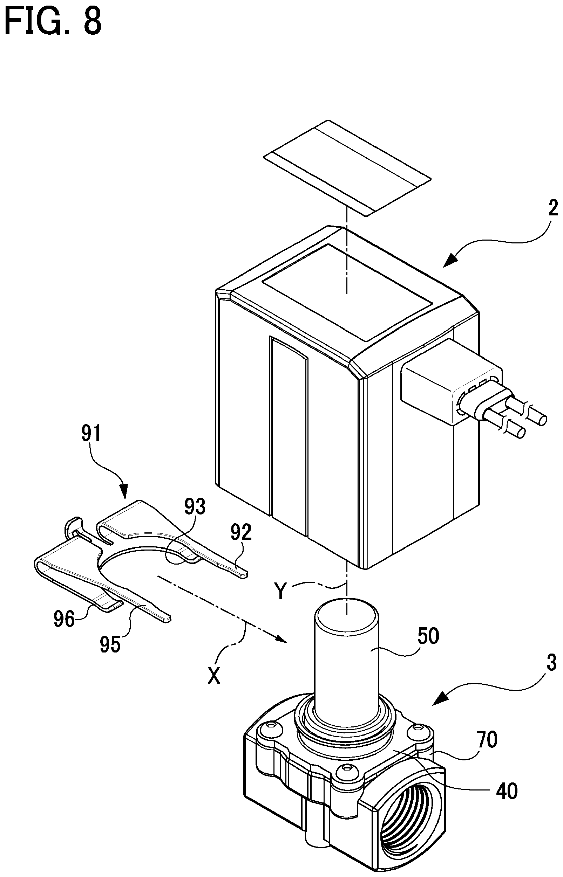

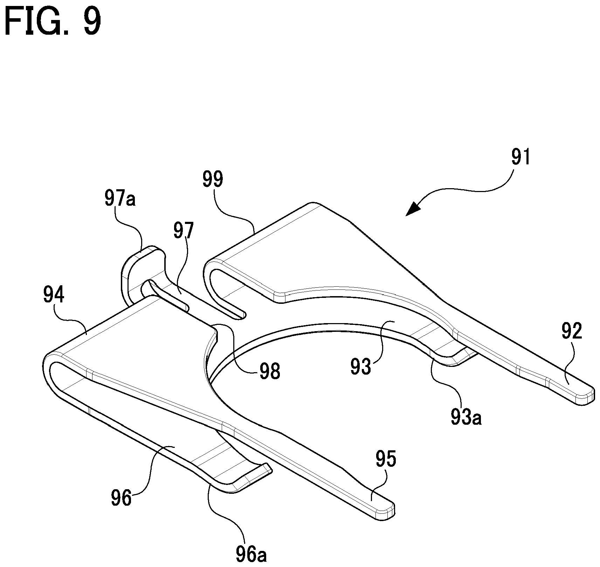

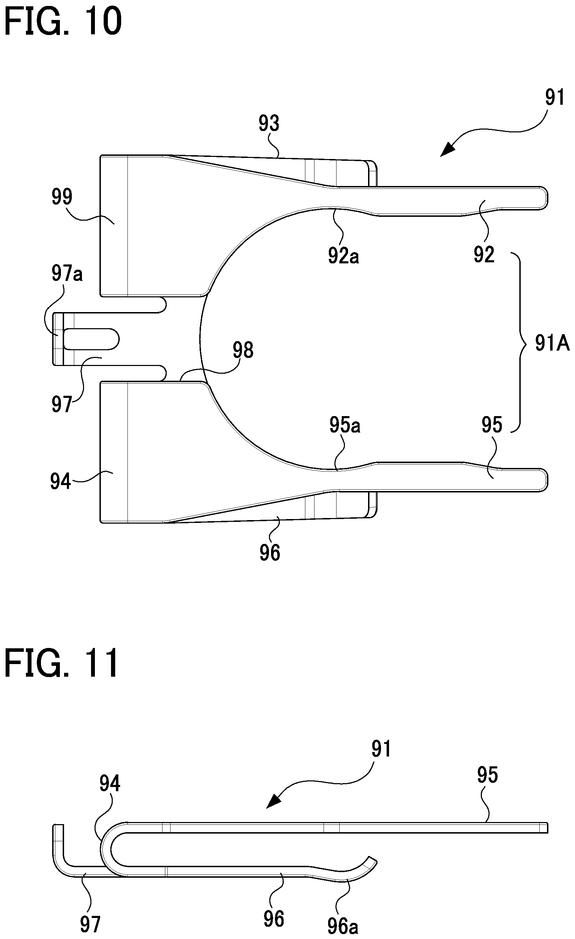

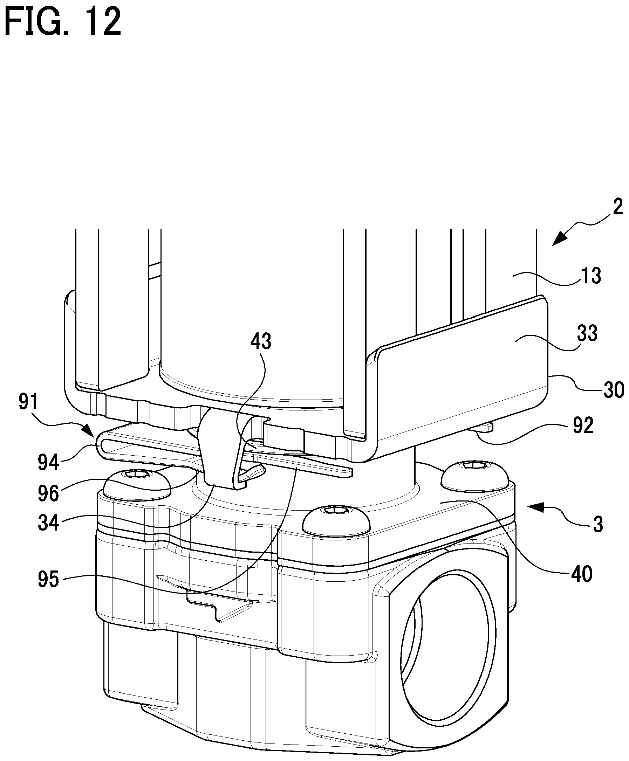

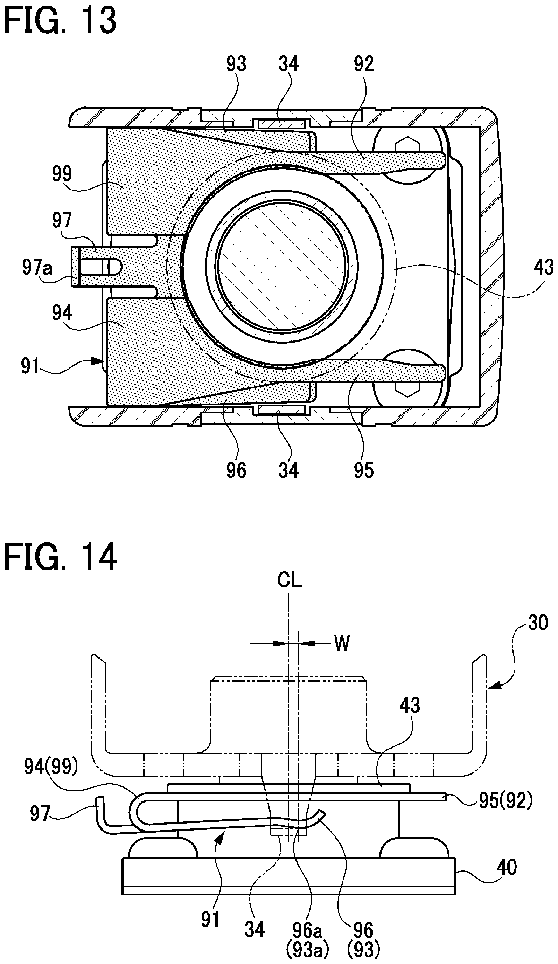

Next, a structure of coupling the coil assembly 2 and the body-pipe assembly 3 and a method for assembling them will be described referring to FIGs. 8 to 14. FIG. 8 is a perspective view showing a coupling structure of the coil assembly 2 and the body-pipe assembly 3 and a method for assembling those assemblies 2 and 3. FIG. 9 is a perspective view of the clip 91 in the embodiment, FIG. 10 is a plan view of the clip 91, and FIG. 11 is a side view of the clip 91. FIG. 12 is a view showing the clip 91 inserted, or mounted, in place with respect to the body-pipe assembly 2 and the coil assembly 3. FIG. 13 is a planar cross-sectional view of the clip 91 in an inserted state and FIG. 14 is a side view of the clip 91 in the inserted state.

The flare pipe 50 of the body-pipe assembly 3 is inserted into the hollow hole 24A of the coil assembly 2 from below. A clip 91 is then inserted in place in a transverse direction to the body-pipe assembly 3 and the coil assembly 2 (e.g., in a direction substantially perpendicular to a central axis Y of each assembly 2 and 3) as indicated by an arrow X in FIG. 8 to couple the coil assembly 2 and the body-pipe assembly 3. In the present embodiment, the clip 91 is made of a resilient stainless-steel plate or sheet having a thickness of about 1 mm, which has been formed into a shape shown in FIG. 8 by press work and bending work.

As shown in FIGs. 8 to 11, the clip 91 includes a clip body 91A having an open end on a distal side, i.e., a right side in FIG. 10. This clip body 91A is separated by a central part in a width direction of the clip 91 (i.e., a vertical direction in FIG. 10) into a pair of left clip body part 92 and a right clip body part 95 arranged one on each side of the central part. This central part corresponds to a cutout 98 which will be mentioned later. The left clip body part 92 has an inner circumferential surface including a circular-arc inner circumferential portion 92a and the right clip body part 95 has an inner circumferential surface including a circular-arc inner circumferential portion 95a. The clip 91 further includes a leaf spring part having an open end on the distal side. This leaf spring part includes a left leaf spring part 93 located corresponding to the left clip body part 92, that is, under the left clip body part 92 in FIG. 8 and a right leaf spring part 96 located corresponding to the right clip body part 95, that is, under the right clip body part 95 in FIG. 8. In the present embodiment, the right side and the left side of the clip 91 are defined based on a front view seen from the left side of FIG. 11 which is a side view, in which the parts or portions of the clip 91 located on the left side (upper side in FIG. 10) are named with a prefix "left" and the parts or portions of the clip 91 located on the right side (lower side in FIG. 10) are named with a prefix "right".

A rear end (a left end in FIG. 10) of the left clip body part 92 and a rear end of the left leaf spring part 93 are connected through a joined portion 99 bent into a U-shaped form in side view, while a rear end (a left end in FIG. 10) of the right clip body part 95 and a rear end of the right leaf spring part 96 are connected through a joined portion 94 bent into a U-shaped form in side view.

The joined portion 94 and the joined portion 99 are separated by the cutout portion 98 formed in the central part of the clip 91 in the width direction. The central part includes a tab 97 provided extending outward from the cutout portion 98, i.e., leftward in FIG. 10. A distal end of this tab 97 is bent upward to form a hook 97a as shown in FIG. 11. This tab 97 serves to detach the clip 91 from the body-pipe assembly 3 and the coil assembly 2 to disassemble the solenoid valve 1. Specifically, the clip 91 is easily removed in such a way that a jig is engaged in the hook 97a of the tab 97 and then pulled outward.

As shown in FIGs. 12 to 14, an upper surface of the left clip body part 92 and an upper surface of the right clip body part 95 are placed in contact with a lower surface of the stuffing flange 43. The left leaf spring part 93 and the right leaf spring part 96 respectively include a contact portion 93a and a contact portion 96a, each having a downward protruding circular-arc shape. These contact portions 93a and the 96a are in contact with the corresponding upper surfaces of the core flanges 34. In the present embodiment, each of the left leaf spring part 93 and the right leaf spring part 96 is designed with a width of about 4.5 mm in a distal end portion (i.e., at each contact portion 93a, 96a), corresponding to the width in the vertical direction in FIG. 10. The leaf spring of the conventional clip has a width of 0.8 mm. Therefore, the width of each leaf spring part 93 and 96 in the present embodiment is five or more times larger than the conventional one. This configuration can achieve significant improvement in durability to repeated load.

When the clip 91 is to be inserted, or mounted, in place with respect to the body-pipe assembly 3 and the coil assembly 2 as shown in FIG. 14, the left leaf spring part 93 and the right leaf spring part 96 are inserted by being deformed in a direction to come close to the left clip body part 92 and the right clip body part 95 (i.e., upward in FIG. 14). The left leaf spring part 93 and the right leaf spring part 96 each have a spring force, or a resilient force, acting in the vertical direction. Thus, these leaf spring parts 93 and 96 urge the stuffing flange 43 and each of the core flanges 34 in a direction to separate from each other, that is, in a vertical direction in FIG. 14. By the urging forces of these leaf spring parts 93 and 96, the coil assembly 2 and the body-pipe assembly 3 are coupled to each other.

In the present embodiment, for example, a pair of the left leaf spring part 93 and the right leaf spring part 96 is designed to exert an urging force of about 50 N in total.

As shown in FIG. 14, the contact portion 93a of the left leaf spring part 93 contacts with the upper surface of one of the core flanges 34 at a position displaced by a distance W to an opposite side to the joined portion 94 relative to the central axis CL of the coil molded portion 20 (the coil 23 and the coil bobbin 24). Similarly, the contact portion 96a of the right leaf spring part 96 contacts with the upper surface of the other core flange 34 at a position displaced by the distance W to an opposite side to the joined portion 99 relative to the central axis CL.

Specifically, the clip 91 is placed such that, in a direction perpendicular to the width direction of the clip body 91A, the joined portion 94 and the joined portion 99 are located on one side (a left side in FIG. 14) and the contact portion 93a of the left leaf spring part 93 and the contact portion 96a of the right leaf spring part 96 are located on the other side (a right side in FIG. 14) relative to the central axis CL of the coil molded portion 20 (the coil 23 and the coil bobbin 24).

The reason why the clip 91 is placed as above is that: when the contact portions 93a and 96a are positioned on the other side, the reactive force received by the left leaf spring part 93 and the right leaf spring part 96 of the clip 91 from the corresponding core flanges 34 generates a component force in a horizontal direction always acting in an opposite direction to the joined portions 94 and 99, that is, acting in an opposite direction to a direction causing the clip 91 to slip out, so that such a component force prevents the clip 91 from slipping out.
(1) The solenoid valve 1 in the present embodiment as described in detail above includes the hollow cylindrical coil molded portion 20 (the coil 23 and the coil bobbin 24), the plunger 60, and the valve element 75, in which the plunger 60 is attracted upon energization of the coil molded portion 20 to move the valve element 75. In this solenoid valve 1, the coil assembly 2 including the coil molded portion 20 and the body-pipe assembly 3 including the body 70 and the flare pipe 50 assembled to the body 70, the flare pipe 50 having the inner peripheral surface (the sliding inner surface) on which the plunger 60 slides, are coupled to each other with the clip 91 mounted transversely with respect to the assemblies 2 and 3. The clip 91 includes the left leaf spring part 93 and the right leaf spring part 96 each urging the coil assembly 2 in the direction of the body-pipe assembly 3. In this solenoid valve 1, the body-pipe assembly 3 includes the stuffing 40 for connection to the coil assembly 2. This stuffing 40 is provided with the stuffing flange 43. In the coil assembly 2, the lower core 30 surrounding the coil molded portion 20 to form a magnetic circuit is provided with the core flange 34. The left leaf spring part 93 and the right leaf spring part 96 are mounted between the stuffing flange 43 and the corresponding core flanges 34. The clip 91 includes the clip body 91A (i.e., the left clip body part 92 including the circular-arc inner circumferential portion 92a and the right clip body part 95 including the circular-arc inner circumferential portion 95a) having the open end, the leaf spring part (i.e., the left leaf spring part 93 and the right leaf spring part 96) having the open end, and the joined portions 94 and 99 that connect the rear end of the clip body 91A (the left clip body part 92 and the right clip body part 95) and the rear end of the leaf spring part (the left leaf spring part 93 and the right leaf spring part 96). The left clip body part 92 and the right clip body part 95 of the clip 91 are placed in contact with the lower surface of the stuffing flange 43. The left leaf spring part 93 includes the contact portion 93a, the right leaf spring part 96 includes the contact portion 95a, and these contact portions 93a and 96a are placed in contact with the upper surfaces of the corresponding core flanges 34. In Patent document 1, the clip body 192 and the leaf spring parts 193 are placed in parallel on the same level. In contrast, in the present embodiment, the clip body 91A and the leaf spring part are arranged one above the other in the height direction of the solenoid valve 1. Thus, the width of each of the left leaf spring part 93 and the right leaf spring part 96 can be designed to be as large as e.g. about 3 mm to 5 mm in the direction perpendicular to the height direction. This configuration enables enhancement of the fatigue strength of the leaf spring part and consequently can avoid fatigue breakdown of the leaf spring part even if the solenoid valve 1 is repeatedly operated e.g. ten million times.
(2) In the solenoid valve 1 described in (1), the clip body 91A is separated by the central part in the width direction into a pair of the left clip body part 92 and the right clip body part 95 arranged one on each side of the central part. Since the left clip body part 92 and the left leaf spring part 93 are separated from the right clip body part 95 and the right leaf spring part 96, they can independently exert respective spring forces. Thus, the clip 91 can make uniform spring actions as a whole and hence the left leaf spring part 93 and the right leaf spring part 96 can be stably urge the coil assembly 2 in the direction of the body-pipe assembly 3.
(3) In the solenoid valve 1 described in (1) or (2), the clip 91 is placed such that, in the direction perpendicular to the width direction of the clip body 91A, the joined portions 94 and 99 are located on one side and the contact portion 93a of the left leaf spring part 93 and the contact portion 96a of the right leaf spring part 96 are located on the other side relative to the central axis CL of the coil molded portion 20 (the coil 23 and the coil bobbin 24). Accordingly, the spring forces of the left leaf spring part 93 and the right leaf spring part 96 always act in the opposite direction to the direction causing the clip 91 to slip out, i.e., in the opposite direction to the joined portions 94 and 99. Even if the solenoid valve 1 is repeatedly operated e.g. ten million times, therefore, the clip 91 is less likely to slip out and the left leaf spring part 93 and the right leaf spring part 96 can stably urge the coil assembly 2 with respect to the body-pipe assembly 3.

The foregoing embodiments are mere examples and give no limitation to the present invention which is defined by claim 1. For instance, each of the joined portions 94 and 99 has a U-shaped form in side view, but may has a right-angled (90°) U-shaped form in side view.

### Reference Signs List

- 1: Solenoid valve
- 2: Coil assembly
- 3: Body-pipe assembly
- 20: Coil molded portion
- 40: Stuffing
- 50: Flare pipe
- 60: Plunger
- 91: Clip
- 91A: Clip body
- 92: Left clip body part
- 93: Left leaf spring part
- 93a, 96a: Contact portion
- 94, 99: Joined portion
- 95: Right clip body part
- 96: Right leaf spring part

## Claims

1. A solenoid valve (1) comprising a hollow cylindrical solenoid part (20), a movable core (60), and a valve element (75), the valve element (75) being configured to attract the movable core (60) upon energization of the solenoid part (20) to thereby move the valve element (75),
wherein a coil assembly (2) including the solenoid part (20) and a body-pipe assembly (3) including a body (70) and a pipe (50) assembled to the body (70), the pipe (50) having a sliding inner surface (51a) on which the movable core (60) slides, are coupled to each other with a clip (91) mounted transversely with respect to the assemblies (2, 3), and
the clip (91) includes a leaf spring part (93, 96) configured to urge the coil assembly (2) in a direction of the body-pipe assembly (3),
the body-pipe assembly (3) includes a stuffing (40) for coupling to the coil assembly (2), the stuffing (40) including a stuffing flange (43),
the coil assembly (2) includes a magnetic core (10, 30) configured to surround the solenoid part (20) to form a magnetic circuit, and the magnetic core (10, 30) includes a pair of core flanges (34), each core flange having a sideways U-Shape in cross section bent inwardly to open inward,
the leaf spring part (93, 96) is mounted between the stuffing flange (43) and the pair of core flanges (34), the leaf spring part (93, 96) having an open end between a left clip leaf spring part (93) and a right clip leaf spring part (96),
**characterized in that**
the clip (91) further includes:
a clip body (91A) having an open end and including a circular-arc inner circumferential portion (92a, 95a), the clip body being separated by a central part in a width direction between a left clip body part (92) and a right clip body part (95), the clip (91) further including:
a left joined portion ( 99) bent into a U-shaped form connecting an end of the left clip body (91A) part opposite the open end of the clip body and a left end of the leaf spring part (93) opposite the open end of the leaf spring part; and
a right joined portion (94) bent into a U-shaped form connecting an end of the right clip body (91A) part opposite the open end of the clip body and a right end of the leaf spring part (93) opposite the open right end of the leaf spring part;
wherein the left joined portion (94) and right joined portion (99) are separated by a cutout portion formed in the central part of the clip,
the clip body (91A) of the clip (91) is placed in contact with the stuffing flange (43), and
the leaf spring part (93, 96) includes a contact portion (93a, 96a), the contact portion (93a, 96a) being placed in contact with the core flange (34), wherein
the clip (91) is placed such that the joined portion (94, 99) is located on one side and the leaf spring part (93, 96) is located on the other side relative to a central axis (CL) of the solenoid part (20) in a direction perpendicular to the width direction.

## Patentansprüche

1. Ein Solenoidventil (1), das einen hohlen zylindrischen Solenoidteil (20), einen beweglichen Kern (60) und ein Ventilelement (75) beinhaltet, wobei das Ventilelement (75) konfiguriert ist, um den beweglichen Kern (60) bei Bestromung des Solenoidteils (20) anzuziehen, um dadurch das Ventilelement (75) zu bewegen,
wobei eine Spulenanordnung (2), die den Solenoidteil (20) umfasst, und eine Körper-Rohr-Anordnung (3), die einen Körper (70) und ein mit dem Körper (70) zusammengebautes Rohr (50) umfasst, mittels einer Klammer (91), die in Bezug auf die Anordnungen (2, 3) quer angebracht ist, miteinander gekoppelt sind, wobei das Rohr (50) eine innere Gleitoberfläche (51a) aufweist, auf der der bewegliche Kern (60) gleitet, und
die Klammer (91) einen Blattfederteil (93, 96) umfasst, der konfiguriert ist, um die Spulenanordnung (2) in eine Richtung der Körper-Rohr-Anordnung (3) zu drängen, die Körper-Rohr-Anordnung (3) eine Packung (40) zum Koppeln der Spulenanordnung (2) umfasst, wobei die Packung (40) einen Packungsflansch (43) umfasst,
die Spulenanordnung (2) einen Magnetkern (10, 30) umfasst, der konfiguriert ist, um den Solenoidteil (20) zu umgeben, um einen magnetischen Kreis zu bilden, und der Magnetkern (10, 30) ein Paar Kernflansche (34) umfasst, wobei jeder Kernflansch im Querschnitt eine seitliche U-Form aufweist, die nach innen gebogen ist, um sich nach innen zu öffnen,
der Blattfederteil (93, 96) zwischen dem Packungsflansch (43) und dem Paar Kernflansche (34) angebracht ist, wobei der Blattfederteil (93, 96) ein offenes Ende zwischen einem linken Klammer-Blattfederteil (93) und einem rechten Klammer-Blattfederteil (96) aufweist,
**dadurch gekennzeichnet, dass**
die Klammer (91) ferner Folgendes umfasst:
einen Klammerkörper (91A), der ein offenes Ende aufweist und einen Kreisbogen-Innenumfangsabschnitt (92a, 95a) umfasst, wobei der Klammerkörper durch einen zentralen Teil in einer Breitenrichtung zwischen einem linken Klammerkörperteil (92) und einem rechten Klammerkörperteil (95) getrennt ist,
wobei die Klammer (91) ferner Folgendes umfasst:
einen linken gefügten Abschnitt (99), der zu einer U-förmigen Gestalt gebogen ist, die ein Ende des linken Klammerkörper(91A)-Teils, das dem offenen Ende des Klammerkörpers entgegengesetzt ist, und ein linkes Ende des Blattfederteils (93), das dem offenen Ende des Blattfederteils entgegengesetzt ist, verbindet; und
einen rechten gefügten Abschnitt (94), der zu einer U-förmigen Gestalt gebogen ist, die ein Ende des rechten Klammerkörper(91A)-Teils, das dem offenen Ende des Klammerkörpers entgegengesetzt ist, und ein rechtes Ende des Blattfederteils (93), das dem offenen rechten Ende des Blattfederteils entgegengesetzt ist, verbindet;
wobei der linke gefügte Abschnitt (94) und der rechte gefügte Abschnitt (99) durch einen Aussparungsabschnitt, der in dem zentralen Teil der Klammer gebildet ist, getrennt sind,
der Klammerkörper (91A) der Klammer (91) in Kontakt mit dem Packungsflansch (43) platziert ist und
der Blattfederteil (93, 96) einen Kontaktabschnitt (93a, 96a) umfasst, wobei der Kontaktabschnitt (93a, 96a) in Kontakt mit dem Kernflansch (34) platziert ist, wobei die Klammer (91) so platziert ist, dass sich der gefügte Abschnitt (94, 99) relativ zu einer zentralen Achse (CL) des Solenoidteils (20) in einer zu der Breitenrichtung senkrechten Richtung auf einer Seite befindet und sich der Blattfederteil (93, 96) auf der anderen Seite befindet.

## Revendications

1. Une soupape à solénoïde (1) comprenant une partie solénoïde cylindrique creuse (20), un noyau mobile (60), et un élément soupape (75), l'élément soupape (75) étant configuré pour attirer le noyau mobile (60) lors de l'excitation de la partie solénoïde (20) afin de déplacer ainsi l'élément soupape (75),
dans laquelle un ensemble bobine (2) incluant la partie solénoïde (20) et un ensemble corps-tuyau (3) incluant un corps (70) et un tuyau (50) assemblé au corps (70), le tuyau (50) présentant une surface interne glissante (51a) sur laquelle le noyau mobile (60) glisse, sont couplés l'un à l'autre par une agrafe (91) montée transversalement par rapport aux ensembles (2, 3), et
l'agrafe (91) inclut une partie ressort à lames (93, 96) configurée pour pousser l'ensemble bobine (2) dans une direction de l'ensemble corps-tuyau (3),
l'ensemble corps-tuyau (3) inclut une garniture (40) pour un couplage à l'ensemble bobine (2), la garniture (40) incluant une bride de garniture (43),
l'ensemble bobine (2) inclut un noyau magnétique (10, 30) configuré pour entourer la partie solénoïde (20) afin de former un circuit magnétique, et le noyau magnétique (10, 30) inclut une paire de brides de noyau (34), chaque bride de noyau présentant une conformation en U de profil en coupe transversale recourbée intérieurement pour s'ouvrir vers l'intérieur,
la partie ressort à lames (93, 96) est montée entre la bride de garniture (43) et la paire de brides de noyau (34), la partie ressort à lames (93, 96) présentant une extrémité ouverte entre une partie ressort à lames d'agrafe de gauche (93) et une partie ressort à lames d'agrafe de droite (96),
**caractérisée en ce que**
l'agrafe (91) comprend en outre :
un corps d'agrafe (91A) présentant une extrémité ouverte et incluant une portion circonférentielle interne en arc de cercle (92a, 95a), le corps d'agrafe étant séparé par une partie centrale dans une direction de la largeur entre une partie de corps d'agrafe de gauche (92) et une partie de corps d'agrafe de droite (95),
l'agrafe (91) incluant en outre :
une portion raccordée de gauche (99) recourbée dans une forme conformée en U reliant une extrémité de la partie de corps d'agrafe (91A) de gauche opposée à l'extrémité ouverte du corps d'agrafe et une extrémité de gauche de la partie ressort à lames (93) opposée à l'extrémité ouverte de la partie ressort à lames ; et
une portion raccordée de droite (94) recourbée dans une forme conformée en U reliant une extrémité de la partie de corps d'agrafe (91A) de droite opposée à l'extrémité ouverte du corps d'agrafe et une extrémité de droite de la partie ressort à lames (93) opposée à l'extrémité de droite ouverte de la partie ressort à lames ;
dans laquelle la portion raccordée de gauche (94) et la portion raccordée de droite (99) sont séparées par une portion découpée formée dans la partie centrale de l'agrafe,
le corps d'agrafe (91A) de l'agrafe (91) est placé en contact avec la bride de garniture (43), et
la partie ressort à lames (93, 96) inclut une portion de contact (93a, 96a), la portion de contact (93a, 96a) étant placée en contact avec la bride de noyau (34), dans laquelle l'agrafe (91) est placée de telle sorte que la portion raccordée (94, 99) est située sur un côté et la partie ressort à lames (93, 96) est située sur l'autre côté par rapport à un axe central (CL) de la partie solénoïde (20) dans une direction perpendiculaire à la direction de la largeur.
